# EUROPÄISCHE PATENTANMELDUNG

(11) **EP 2 179 878 A1**
(43) Veröffentlichungstag der Anmeldung: **28.04.2010**
(21) Anmeldenummer: 09009736.1
(22) Anmeldetag: 28.07.2009
(51) Int. Cl.: B60J 7/20

(54) **Cabriolet-Heckklappe**

(30) Priorität: 24.10.2008 DE 102008053084
(71) Anmelder: Webasto AG, 82131 Stockdorf (DE)
(72) Erfinder: Ki, Won Yong, Seoul 138225 (KR); Dintner, Thomas, 80995 München (DE)
(74) Vertreter: advotec.

(57) **Zusammenfassung**

Die Erfindung betrifft ein Cabriolet-Fahrzeug, umfassend ein zwischen einer Schließstellung und einer Ablagestellung verstellbares Verdeck sowie eine Stauraumabdeckung (10) mit einer Heckklappe (14), die wahlweise als Kofferraumdeckel mittels einer im Bereich ihres vorderen Randes angeordneten bugseitigen Schwenkeinrichtung (16) um eine bugseitige Schwenkachse oder als Verdeckablagekastendeckel mittels einer im Bereich ihres hinteren Randes angeordneten, heckseitigen Schwenkeinrichtung (20) um eine heckseitige Schwenkachse schwenkbar ist, und einer Antriebseinrichtung (36A, 36B) für die heckseitige Schwenkeinrichtung. Erfindungsgemäß sind eine Lagerung der Antriebseinrichtung (36A, 36B) für die heckseitige Schwenkeinrichtung und die heckseitige Schwenkeinrichtung jeweils heckklappenfest ausgebildet, so dass die Antriebseinrichtung (36A, 36B) und die heckseitige Schwenkeinrichtung (20) bei Nutzung der Heckklappe (14) als Kofferraumdeckel zusammen mit der Heckklappe (14) um die bugseitige Schwenkachse verschwenkt werden.

## Beschreibung

Die Erfindung betrifft ein Cabriolet-Fahrzeug nach dem Oberbegriff des Patentanspruches 1.

Ein derartiges Cabriolet-Fahrzeug ist beispielsweise aus der DE 199 32 500 C2 bekannt und umfasst eine heckseitige Stauraumabdeckung, mittels der ein wahlweise als Verdeckablagekasten oder als Gepäckstauraum nutzbarer heckseitiger Stauraum des Fahrzeugs verschließbar ist. Diese Stauraumabdeckung umfasst eine Heckklappe, die wahlweise als Kofferraumdeckel um eine bugseitige Schwenkachse oder als Verdeckablagekastendeckel um eine heckseitige Schwenkachse schwenkbar ist. Der jeweilige Schwenkvorgang erfolgt mittels beidseits angeordneter bugseitiger Viergelenkmechanismen bzw. beidseits angeordneter heckseitiger Viergelenkmechanismen. Beidseits teilen sich der jeweilige heckseitige und der jeweilige bugseitige Viergelenkmechanismus einen gemeinsamen, angetriebenen Hebel. Des Weiteren ist zwischen dem jeweiligen vorderen Viergelenkmechanismus und dem jeweiligen hinteren Viergelenkmechanismus ein Stützhebel angeordnet, der sich entlang eines Randes des Stauraums im Wesentlichen in Fahrzeuglängsrichtung erstreckt. Bei Nutzung der Heckklappe als Verdeckablagekastendeckel wird der Stützhebel zusammen mit der Heckklappe verschwenkt. Durch das aufwändige Hebelsystem, das aus den Viergelenkmechanismen und den Stützhebeln gebildet ist, ergibt sich ein hoher Bauraumbedarf, der wiederum zu Lasten der möglichen Breite des Verdecks geht, welches beim Öffnen und beim Schließen zwischen den beidseits angeordneten Hebeln durchtaucht. Auch ist durch die Hebelmechanismen, die in einen den Stauraum zumindest seitlich begrenzenden Rahmen integriert sind, die Gestaltungsfreiheit hinsichtlich des Designs des betreffenden Fahrzeugs in dessen Heckbereich eingeschränkt.

Der Erfindung liegt die Aufgabe zugrunde, ein Cabriolet-Fahrzeug der einleitend genannten Gattung zu schaffen, dessen Stauraumabdeckung sich durch einen gegenüber dem Stand der Technik vereinfachten Aufbau auszeichnet und hinsichtlich des erforderlichen Bauraums optimiert ist.

Diese Aufgabe ist erfindungsgemäß durch das Cabriolet-Fahrzeug mit den Merkmalen des Patentanspruches 1 gelöst.

Der Kern der Erfindung besteht mithin darin, dass die heckseitige Schwenkeinrichtung in die Heckklappe integriert ist, so dass zwischen dieser und der Fahrzeugkarosserie keine Verbindung besteht. Vielmehr stützt sich die Antriebseinrichtung für die heckseitige Schwenkeinrichtung an der Heckklappe ab. Auch ist die Schwenkeinrichtung und die durch diese definierte Schwenkachse sind mit der Heckklappe verbunden bzw. in diese integriert. Bei Nutzung der Heckklappe als Kofferraumdeckel werden die Antriebseinrichtung und die heckseitige Schwenkeinrichtung und auch deren Schwenkachse, um die die Heckklappe bei Nutzung als Verdeckablagekastendeckel schwenkbar ist, zusammen mit der Heckklappe um die bugseitige Schwenkachse verschwenkt. Ein heckseitiger Rahmen, der Hebelmechanismen aufweist, mit der Karosserie verbunden ist und den Stauraum zumindest an dessen seitlichen Rändern begrenzt, ist nicht mehr erforderlich. Dies führt gegenüber dem oben beschriebenen Stand der Technik zu einer Gewichtseinsparung und auch zu einem geringen Bauraumbedarf für die Schwenkeinrichtungen. Der eingesparte Bauraum kann für andere Zwecke genutzt werden.

Bei einer bevorzugten Ausführungsform des Cabriolet-Fahrzeugs nach der Erfindung erfolgt die Lagerung der Antriebseinrichtung an einem Lagerpunkt eines Lagerelements, der in Fahrzeuglängsrichtung von der durch die heckseitige Schwenkeinrichtung definierten Schwenkachse beabstandet ist. Der Abstand zwischen dem Lagerpunkt und der Schwenkachse ist zweckmäßigerweise an die Auslegung der jeweiligen Heckklappe angepasst, so dass optimale Hebelverhältnisse vorliegen.

Das Lagerelement ist beispielsweise ein Ausleger, der als Bügel oder Lagerblech ausgebildet sein kann und mit der Heckklappe starr verbunden ist. Zweckmäßiger Weise steht das Lagerelement von der Heckklappe, insbesondere von einem in Schließstellung der Heckklappe im Wesentlichen vertikalen Abschnitt der Heckklappe in Fahrzeuglängsrichtung in Richtung des Stauraums vor.

Um eine zuverlässige und betriebssichere Funktion der Stauraumabdeckung zu gewährleisten und um den Stauraum sicher verschließen zu können, ist das Lagerelement bei Nutzung der Heckklappe als Verdeckkastendeckel und in Schließstellung der Heckklappe mittels eines Kofferraumschlosses karosseriefest gesichert.

Des Weiteren kann die Antriebseinrichtung, die mindestens einen Hydraulikzylinder, einen Pneumatikzylinder oder einen Elektroantrieb umfassen kann und sich vorzugsweise über ein Gelenk an dem Ausleger abstützt, auf ein starr mit der Heckklappe verbundenes Hebelelement wirken, so dass die Antriebskräfte in optimierter Weise in die Heckklappe eingeleitet werden können.

Die heckseitige Schwenkeinrichtung kann als Eingelenkmechanik oder auch als Mehrgelenkmechanik, insbesondere als Viergelenkmechanik ausgebildet sein.

Um eine störungsfreie Nutzung der Heckklappe als Kofferraumdeckel gewährleisten zu können, kann die bugseitige Schwenkeinrichtung einer bevorzugten Ausführungsform mittels eines bugseitigen Schlossmechanismus karosseriefest gesichert werden.

Die bugseitige Schwenkeinrichtung kann eine Mehrgelenkmechanik umfassen, kann aber auch als Scharniereinrichtung mit einem schwanenhalsartigen Scharnierbügel ausgebildet sein, mittels dessen die Heckklappe zur Nutzung als Kofferraumdeckel verschwenkt werden kann.

Des Weiteren kann die bugseitige Schwenkeinrichtung an einer ein separates Bauteil bildenden bugseitigen Stauraumabdeckung gelagert sein, das bei Nutzung der Heckklappe als Verdeckablagekastendeckel zusammen mit dieser verschwenkt wird und bei Nutzung der Heckklappe als Kofferraumdeckel mittels des bugseitigen Schlossmechanismus karosseriefest gesichert ist. Dieses bugseitige Stauraumabdeckelement bildet mithin ein so genanntes Tonneau-Cover, das Teil der Stauraumabdeckung ist und in Schließstellung des Verdecks eine Hutablage in dem von dem Verdeck über deckten Fahrzeuginnenraum bilden kann.

Weitere Vorteile und vorteilhafte Ausgestaltungen des Gegenstandes der Erfindung sind der Beschreibung, der Zeichnung und den Patentansprüchen entnehmbar.

Ein Ausführungsbeispiel einer im Sinne der Erfindung ausgebildeten Stauraumabdeckung ist in der Zeichnung schematisch vereinfacht dargestellt und wird in der nachfolgenden Beschreibung näher erläutert. Es zeigt:
- Fig. 1: eine perspektivische Ansicht einer Stauraumabdeckung eines Cabriolet-Fahrzeugs nach der Erfindung mit einer Heckklappe in deren Schließstellung;
- Fig. 2: eine Fig. 1 entsprechende Ansicht, jedoch in Öffnungsstellung der Heckklappe bei deren Nutzung als Verdeckablagekastendeckel;

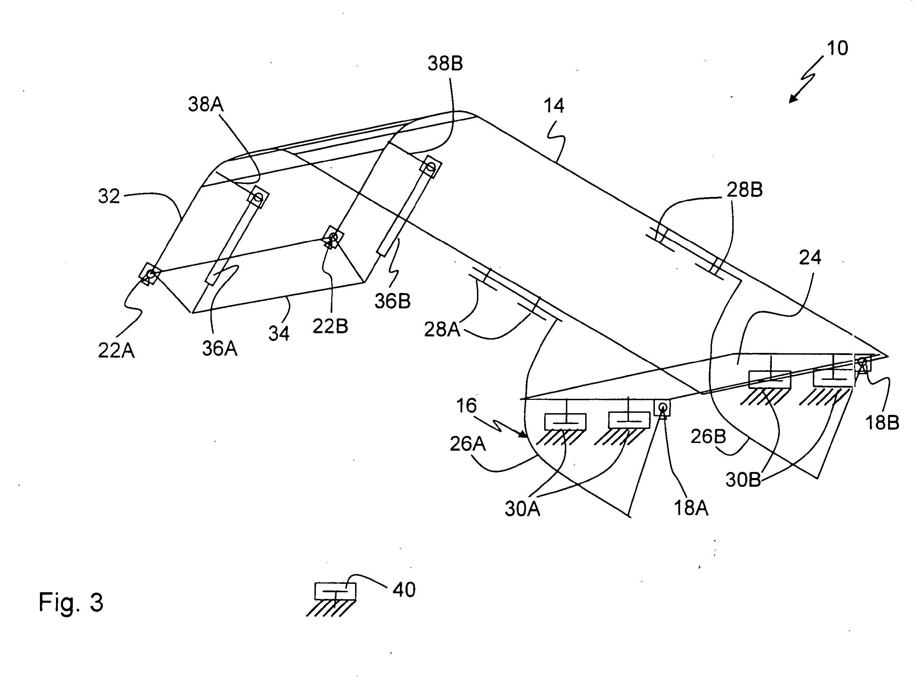

- Fig. 3: eine Fig. 1 entsprechende Ansicht, jedoch in Öffnungsstellung der Heckklappe bei deren Nutzung als Kofferraumdeckel;
- Fig. 4: eine Seitenansicht der Stauraumabdeckung in Schließstellung der Heckklappe;
- Fig. 5: eine Fig. 4 entsprechende Ansicht, jedoch in Öffnungsstellung der Heckklappe bei deren Nutzung als Verdeckablagekastendeckel; und

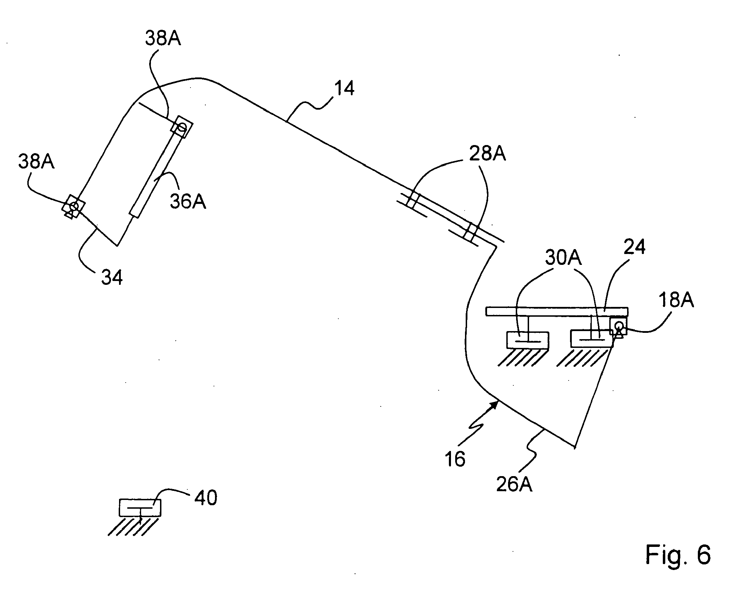

- Fig. 6: eine Fig. 4 entsprechende Ansicht, jedoch in Öffnungsstellung der Heckklappe bei deren Nutzung als Kofferraumdeckel.

In der Zeichnung ist eine Stauraumabdeckung 10 eines ansonsten nicht näher dargestellten Cabriolet-Fahrzeugs dargstellt, welches ein beispielsweise aus starren Dachsegmenten aufgebautes Verdeck aufweist, das wahlweise zwischen einer Schleißstellung, in der ein Fahrzeuginnenraum überdeckt ist, und einer Ablagestellung verstellbar ist, in der der Fahrzeuginnenraum freigegeben ist und das Verdeck in einem heckseitigen Stauraum 12 ablegbar ist.

Die Stauraumabdeckung 10 umfasst eine Heckklappe 14, die wahlweise als Kofferraumdeckel oder als Verdeckablagekastendeckel nutzbar ist. Bei Nutzung der Heckklappe 14 als Kofferraumdeckel kann diese mittels einer fahrzeugbugseitigen Schwenkeinrichtung 16 um eine durch Lagerpunkte 18A und 18B gebildete bugseitige Schwenkachse geschwenkt werden, so dass der Stauraum 12 zum Laden oder Entladen von Ladegut von der Heckseite des betreffenden Kraftfahrzeuges zugänglich ist. Zur Nutzung der Heckklappe 14 als Verdeckablagekastendeckel ist diese mittels einer heckseitigen Schwenkeinrichtung 20 um heckseitige Lagerpunkte 22A und 22B schwenkbar, so dass der Stauraum 12 zur Ablage des Verdecks von vorne zugänglich ist.

Die Stauraumabdeckung 10 umfasst des Weiteren ein vorderes, bugseitiges Stauraumabdeckelement 24, das ein so genanntes Tonneau-Cover darstellt und bei Nutzung der Heckklappe 14 als Verdeckablagekastendeckel zusammen mit dieser um die von den Lagerpunkten 22A und 22B gebildete Schwenkachse verschwenkbar ist. Bei Nutzung der Heckklappe 14 als Kofferraumdeckel erfährt das vordere Stauraumabdeckelement 24 keine Schwenkbewegung. Die ein hinteres Stauraumabdeckelement bildende

Heckklappe 14 schließt sich in ihrer Schließstellung heckseitig an das bugseitige Stauraumabdeckelement 24 an.

Die vordere Schwenkeinrichtung 16 umfasst beidseits einer vertikalen Fahrzeuglängsmittelebene jeweils einen schwanenhalsartigen Scharnierbügel 26A bzw. 26B, der mit einem Ende an dem zugehörigen Lagerpunkt 18A bzw. 18B gelagert ist und mit seinem anderen Ende über Fixierpunkte 28A bzw. 28B an der Innenseite der Heckklappe 14 fixiert ist. Die Lagerpunkte 18A und 18B der schwanenhalsartigen Scharnierbügel 26A und 26B sind an dem bugseitigen Stauraumabdeckelement 24 ausgebildet.

Das vordere Stauraumabdeckelement 24 ist bezogen auf die vertikale Fahrzeuglängsmittelebene beidseits jeweils mittels eines bugseitigen Schlossmechanismus 30A bzw. 30B lösbar an der nicht näher dargestellten Karosserie des betreffenden Cabriolet-Fahrzeugs sicherbar. In Schließstellung der Hecklappe 14 und bei Nutzung der Heckklappe 14 als Kofferraumdeckel sind die Schlossmechanismen 30A und 30B in Sperrstellung. Bei Nutzung der Heckklappe 14 als Verdeckablagekastendeckel sind die Schlossmechanismen 30A und 30B in Freigabestellung. Da die Lagerpunkte 18A und 18B an dem bugseitigen Stauraumabdeckelement 24 ausgebildet sind, sind diese bei Nutzung der Heckklappe 14 als Kofferraumdeckel durch die Schlossmechanismen 30A und 30B karosseriefest gesichert und bei Nutzung der Heckklappe 14 als Verdeckablagekastendeckel von der Karosserie gelöst und zusammen mit der Heckklappe 14 um die von den heckseitigen Lagerpunkten 22A und 22B gebildete Schwenkachse verschwenkbar.

Die heckseitige Schwenkeinrichtung 20, die die Lagerpunkte 22A und 22B umfasst, ist im Bereich eines in Schließstellung im Wesentlichen vertikalen Abschnitts 32 der Heckklappe 14 ausgebildet und umfasst einen sich in Richtung Stauraum 12 erstreckenden Ausleger 34, der bügelartig ausgebildet sein kann und starr mit der Heckklappe 32 verbunden ist. An dem Ausleger 34 stützt sich beidseits der vertikalen Fahrzeuglängsmittelebene jeweils ein über ein jeweiliges Gelenk angebundener Hydraulikzylinder 36A bzw. 36B ab, welcher mit seinem dem Ausleger 34 abgewandten Ende an einem Hebelelement 38A bzw. 38B angelenkt ist, welches starr mit der Heckklappe 14 verbunden ist und sich von dessen vertikalen Abschnitt 32 in Richtung Stauraum 12 erstreckt. Die Hydraulikzylinder 36A und 36B bilden die Antriebseinrichtung der heckseitigen Schwenkeinrichtung.

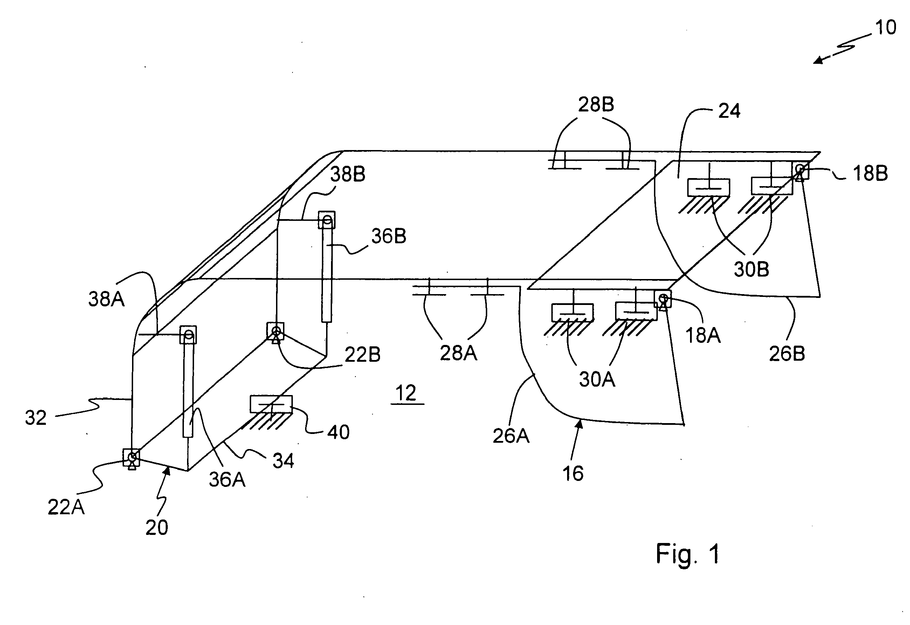

In der in Figur 1 dargestellten Schließstellung und zur Nutzung der Heckklappe 14 als Verdeckkastenablagedeckel ist der Ausleger 34 mittels eines Kofferraumschlosses 40 karosseriefest gesichert.

Die in der Zeichnung dargestellte Stauraumabdeckung 10 arbeitet in nachfolgend beschriebener Weise.

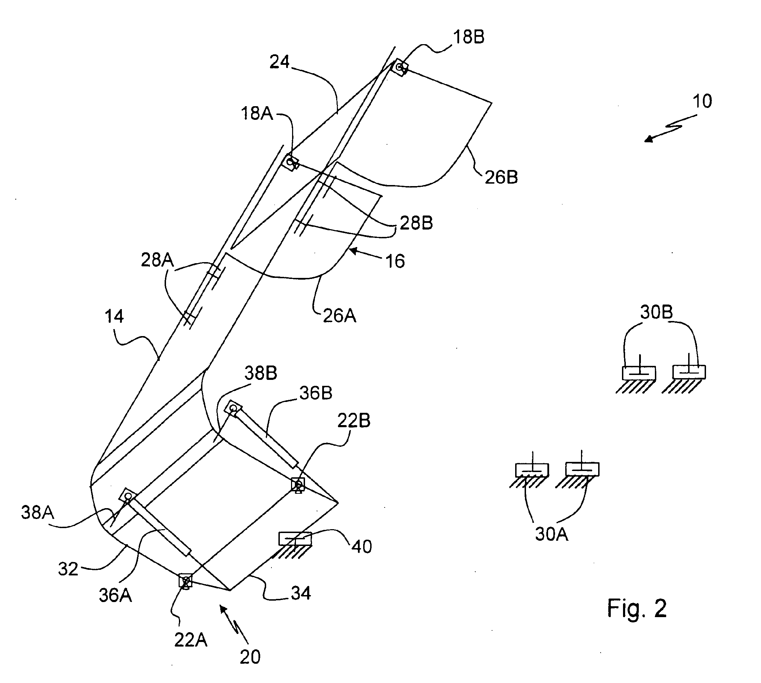

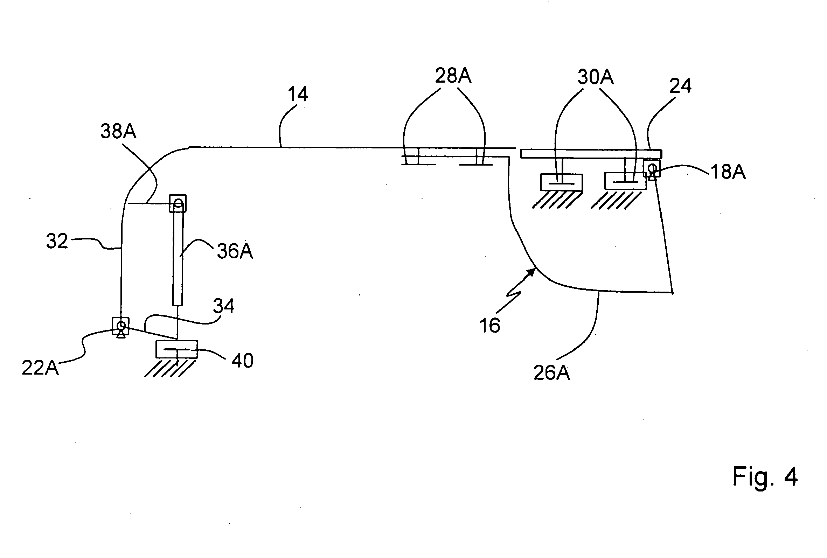

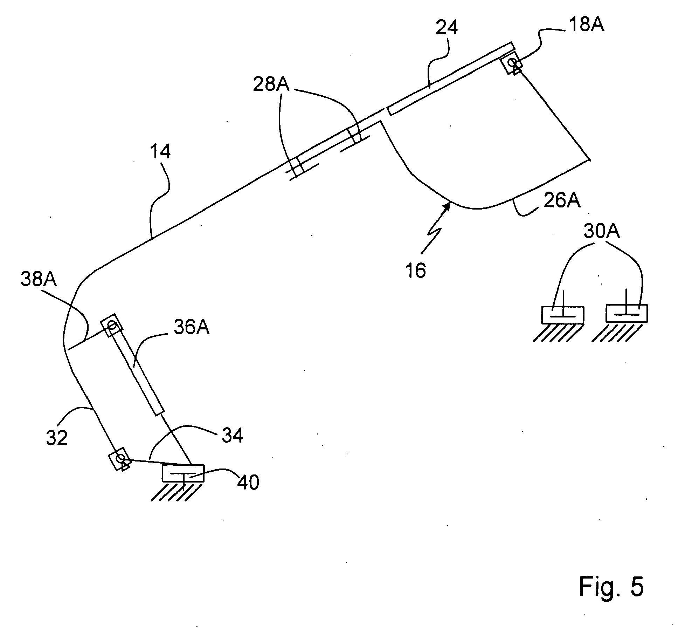

Ausgehend von der in den Figuren 1 und 4 dargestellten Schließstellung werden zur Nutzung der Heckklappe 14 als Verdeckkastenablagedeckel zunächst die mit dem vorderen Stauraumabdeckelement 24 zusammenwirkenden Schlossmechanismen 30A und 30B freigegeben. Damit wird die Sicherung des vorderen Stauraumabdeckelements 24 und der hiermit verbundenen Lagerpunkte 18A und 18B für die Scharnierbügel 26A und 26B an der Fahrzeugkarosserie aufgehoben. Anschließend werden die Hydraulikzylinder 36A und 36B bei gesperrtem Kofferraumschloss 40 betätigt, so dass durch die auf die Hebelelemente 38A und 38B ausgeübte Schubkraft die Heckklappe 14 zusammen mit dem bugseitigen Stauraumabdeckelement 24 um die von den Lagerpunkten 22A und 22B gebildete Schwenkachse in die in den Figuren 2 und 5 dargestellte Stellung verschwenkt werden kann. Anschließend kann das Verdeck durch Betätigung von dessen Verdeckgestänge in dem Stauraum 12 abgelegt werden. Nach Ablage des Verdecks in dem Stauraum 12 wird die Stauraumabdeckung 10 durch erneute Betätigung der Hydraulikzylinder 36A und 36B geschlossen, die dann eine Zugkraft auf die Hebelelemente 38A und 38B ausüben. Nach Beendigung des Schließvorgangs werden die Schlossmechanismen 30A und 30B wieder in Sperrstellung gebracht, so dass das vordere Stauraumabdeckelement 24 und die bugseitigen Lagerpunkte 18A und 18B karosseriefest gesichert sind.

Bei Nutzung der Heckklappe 14 als Kofferraumdeckel wird ausgehend von der in den Figuren 1 und 4 dargestellten Schließstellung zunächst das Kofferraumschloss 40 entsichert, so dass die karosseriefeste Anbindung des Auslegers 34 aufgehoben wird. Anschließend kann die Heckklappe 14 über die bugseitige Schwenkeinrichtung 16 um die bugseitigen Lagerpunkte 18A und 18B in Öffnungsstellung verschwenkt werden, so dass der Stauraum 12 von der Fahrzeugheckseite aus zugänglich ist. Der Öffnungsvorgang kann durch Federeinrichtungen oder dergleichen unterstützt werden. Hierbei wird die Heckklappe 14 zusammen mit der heckseitigen Schwenkeinrichtung 20, d.h. zusammen mit den Lagerpunkten 22A und 22B, dem Ausleger 34, den Hydraulikzylindern 36A und 36B und den Hebelelementen 38A und 38B verschwenkt. Das bugseitige Stauraumabdeckelement 24 bleibt in Position, d.h. die Schlossmechanismen 30A und 30B bleiben in Sperrstellung, so dass die Lagerpunkte 18A und 18B für die Scharnierbügel 26A und 26B karosseriefest gesichert sind. Beim beispielsweise manuell erfolgenden Schließen der Heckklappe 14 wird der Ausleger 34 bei Erreichen der Schließstellung an dem Kofferraumschloss 40 gesichert, so dass die Heckklappe 14 in Schließstellung gesichert wird.

### Bezugszeichenliste

- 10: Stauraumabdeckung
- 12: Stauraum
- 14: Heckklappe
- 16: Schwenkeinrichtung
- 18A, B: Lagerpunkte
- 20: Schwenkeinrichtung
- 22A, B: Lagerpunkte
- 24: Stauraumabdeckelement
- 26A, B: Scharnierbügel
- 28A, B: Fixierpunkte
- 30A, B: Schlossmechanismus
- 32: Abschnitt
- 34: Ausleger
- 36A, B: Hydraulikzylinder
- 38A, B: Hebelelemente
- 40: Kofferraumschloss

## Patentansprüche

1. Cabriolet-Fahrzeug, umfassend ein zwischen einer Schließstellung und einer Ablagestellung verstellbares Verdeck sowie eine Stauraumabdeckung (10) mit einer Heckklappe (14), die wahlweise als Kofferraumdeckel mittels einer im Bereich ihres vorderen Randes angeordneten bugseitigen Schwenkeinrichtung (16) um eine bugseitige Schwenkachse oder als Verdeckablagekastendeckel mittels einer im Bereich ihres hinteren Randes angeordneten, heckseitigen Schwenkeinrichtung (20) um eine heckseitige Schwenkachse schwenkbar ist, und einer Antriebseinrichtung (36A, 36B) für die heckseitige Schwenkeinrichtung (20), **dadurch gekennzeichnet, dass** eine Lagerung der Antriebseinrichtung (36A, 36B) für die heckseitige Schwenkeinrichtung (20) und die heckseitige Schwenkeinrichtung (20) jeweils heckklappenfest ausgebildet sind, so dass die Antriebseinrichtung (36A, 36B) und die heckseitige Schwenkeinrichtung (20) bei Nutzung der Heckklappe (14) als Kofferraumdeckel zusammen mit der Heckklappe (14) um die bugseitige Schwenkachse verschwenkt werden.

2. Cabriolet-Fahrzeug nach Anspruch 1, **dadurch gekennzeichnet, dass** die Lagerung der Antriebseinrichtung (36A, 36B) an einem Lagerpunkt eines Lagerelements (34) erfolgt, der in Fahrzeuglängsrichtung von der durch die heckseitige Schwenkeinrichtung (20) definierten heckseitigen Schwenkachse beabstandet ist.

3. Cabriolet-Fahrzeug nach Anspruch 2, **dadurch gekennzeichnet, dass** das Lagerelement (34) ein Ausleger, der insbesondere ein Bügel oder ein Lagerblech ist und der mit der Heckklappe (14) starr verbunden ist.

4. Cabriolet-Fahrzeug nach Anspruch 2 oder 3, **dadurch gekennzeichnet, dass** das Lagerelement (34) bei Nutzung der Heckklappe (14) als Verdeckkastendeckel mittels eines Kofferraumschlosses (40) karosseriefest gesichert ist.

5. Cabriolet-Fahrzeug nach einem der Ansprüche 1 bis 4, **dadurch gekennzeichnet, dass** die Antriebseinrichtung (36A, 36B) auf ein starr mit der Heckklappe (14) verbundenes Hebelelement (38A, 38B) wirkt.

6. Cabriolet-Fahrzeug nach einem der Ansprüche 1 bis 5, **dadurch gekennzeichnet, dass** die heckseitige Schwenkeinrichtung (20) eine Mehrgelenkmechanik umfasst.

7. Cabriolet-Fahrzeug nach einem der Ansprüche 1 bis 6, **dadurch gekennzeichnet, dass** die Antriebseinrichtung (36A, 36B) für die heckseitige Schwenkeinrichtung mindestens einen Hydraulikzylinder, einen Pneumatikzylinder oder einen Elektroantrieb umfasst.

8. Cabriolet-Fahrzeug nach einem der Ansprüche 1 bis 7, **dadurch gekennzeichnet, dass** die bugseitige Schwenkeinrichtung (20) bei Nutzung der Heckklappe (14) als Kofferraumdeckel mittels eines bugseitigen Schlossmechanismus (30A, 30B) karosseriefest gesichert ist.

9. Cabriolet-Fahrzeug nach Anspruch 8, **dadurch gekennzeichnet, dass** die bugseitige Schwenkeinrichtung (16) an einer ein separates Bauteil bildenden bugseitigen Stauraumabdeckelement (24) gelagert ist, die bei Nutzung der Heckklappe (14) als Verdeckkastendeckel zusammen mit dieser verschwenkt wird und bei Nutzung der Heckklappe (14) als Kofferraumdeckel mittels des bugseitigen Schlossmechanismus (30A, 30B) karosseriefest gesichert ist.

10. Cabriolet-Fahrzeug nach einem der Ansprüche 1 bis 9, **dadurch gekennzeichnet, dass** die bugseitige Schwenkeinrichtung (16) einen schwanenhalsartigen Scharnierbügel (26A, 26B) umfasst.
